# EUROPÄISCHE PATENTSCHRIFT

(11) **EP 0 468 333 B1**
(45) Veröffentlichungstag und Bekanntmachung des Hinweises auf die Patenterteilung: **27.12.1996**
(21) Anmeldenummer: 91111756.2
(22) Anmeldetag: 15.07.1991
(51) Int. Cl.: B32B 27/32, B65D 65/40

(54) **Biaxial orientierte siegelfähige Polypropylenfolie mit verbesserten Barriereeigenschaften**
Biaxially oriented heatsealable polypropylene film with improved barrier properties
Film de polypropylène thermoscellable orienté biaxialement ayant des propriétés des barrières améliorées

(30) Priorität: 21.07.1990 DE 4023272
(43) Veröffentlichungstag der Anmeldung: 29.01.1992
(73) Patentinhaber: HOECHST AKTIENGESELLSCHAFT, 65926 Frankfurt am Main (DE)
(72) Erfinder: Schuhmann, Detlef Erich, Dr., W-6229 Kiedrich (DE); Peiffer, Herbert, Dr., W-6550 Mainz-Finthen (DE); Murschall, Ursula, Dr., W-6505 Nierstein (DE); Schlögl, Gunter, Dr., W-6233 Kelkheim (DE)

(56) Entgegenhaltungen:
- EP-A- 0 180 087
- EP-A- 0 247 898
- EP-A- 0 340 579
- EP-A- 0 348 749
- EP-A- 0 420 114
- US-A- 4 786 533

## Beschreibung

Die Erfindung betrifft eine durch Coextrusion hergestellte, mehrschichtige Polypropylenfolie mit verbesserten Barriereeigenschaften hinsichtlich Durchtritt von Wasserdampf und Sauerstoff bei gleichzeitig guten Gleiteigenschaften und niedrigen Schrumpfwerten, um eine gute Maschinengängigkeit zu gewährleisten.

In der EP-A-0 247 898 (= US-A-4,921,749) wird eine spezielle Polypropylenfolie beschrieben, die insbesondere eine gute Siegelnahtfestigkeit sowie verbesserte Barriereeigenschaften aufweisen soll. Die erfindungsgemäße Folie weist gegenüber der in der EP-A-0 247 898 beschriebenen Folie Vorteile bei der Verarbeitung insbesondere in bezug auf die Maschinengängigkeit bei schnellgängigen Verpackungsmaschinen sowie beim Warmblockverhalten auf. Unter Maschinengängigkeit wird die Verarbeitbarkeit einer Folie auf hochtaktigen Verpackungsmaschinen verstanden. Dabei darf die Folie weder zu glatt noch zu rauh sein, da es sonst zu Stauungen vor dem Schneidevorgang kommen kann. Die Steifigkeit der Folie ist hierfür ebenfalls von Bedeutung. Unter Warmblockverhalten wird die vor allem durch Wärmeeinwirkung hervorgerufene Haftung von folienverpackten Gegenständen aneinander verstanden. Je geringer diese Haftung bei erhöhter Temperatur, desto besser das Warmblockverhalten.

In der DE-A-35 35 472 (= US-A-4,786,533) werden Polypropylenfolien beschrieben, die einen Harzanteil in der Basisschicht aufweisen. Insbesondere die Wasserdampf-Barriereeigenschaften der dort beschriebenen Folien sind jedoch noch nicht befriedigend, so daß ein Bedürfnis bestand, Folien zur Verfügung zu stellen, die hinsichtlich dieser Eigenschaft verbessert sind.

In der DE-A 38 14 942 werden Polypropylenfolien beschrieben,die einen Harzanteil in der Basisschicht von 5-40 Gew.-% mit einem Harzerweichungspunkt von 80 - 125°C aufweisen. Diese Folien werden als Schrumpfetiketten verwendet und weisen Nachteile hinsichtlich der Wasserdampf- und Sauerstoff-Barrierewirkung auf. Außerdem kommt es im Vergleich zu den erfindungsgemäßen Folien verstärkt zu Ablagerungen an den Walzen.

EP-A-340 579 beschreibt eine Schrumpffolie aus mehreren polyolefinischen Schichten. Die Basisschicht enthält Polypropylen und einen Harzzusatz. Die siegelfähigen Deckschichten bestehen aus polyolefinischen Rohstoffen. Die Folie besitzt ein Schrumpfvermögen in Querrichtung von mehr als 15 % bei 900°C und in Längsrichtung von weniger als 6 %, ebenfalls bei 90°C. Die Folie wird nach der Coextrusion derartig streckorientiert, daß der Wert der Doppelbrechung der längsgestreckten Folie, Δn, im Bereich von 12 bis 15 x 10⁻³ liegt.

Die EP-A-420 114 ist eine gegenüber dem vorliegenden Patent nicht vorveröffentlichte Druckschrift (Stand der Technik nach Artikel 54(3) EPÜ). Sie beschreibt ein opakes verstrecktes Folienlaminat dessen Schichten A und B schmelzverklebt sind. Die Schicht A des Laminats enthält 97-70 Gew.-% kristallines Polypropylen und 3-30 Gew.-% eines Cyclopentadien Petroleum Harzes mit einem Erweichungspunkt von 160°C oder mehr. Schicht A ist in mindestens eine Richtung verstreckt. Die Schicht B enthält kristallines Polypropylen dessen Kristallschmelzpunkt sich um mindestens 10°C vom Kristallschmelzpunkt des Polypropylens der Schicht A unterscheidet.

Die Aufgabe der vorliegenden Erfindung besteht darin, eine Polypropylenfolie zu schaffen, die verbesserte Barriereeigenschaften hinsichtlich Durchtritt von Wasserdampf sowie Sauerstoff, bei gleichzeitig guten Gleiteigenschaften und niedrigen Schrumpfwerten, aufweist.

Gelöst wird die Aufgabe durch eine Polypropylenfolie, deren kennzeichnende Merkmale darin zu sehen sind, daß sie aus einer Basisschicht aufgebaut ist, welche aus Polypropylen und einem Kohlenwasserstoff-Harz mit einem Erweichungspunkt ≧ 140°C ausgewählt aus der Gruppe bestehend aus Erdölharzen, Styrolharzen, Cyclopentadienharzen und Terpenharzen besteht und wenigstens eine Deckschicht aufweist, die besteht aus
a) einem statistischen Ethylen/Propylen-Copolymeren mit einem Ethylengehalt (hoher oder niedriger Dichte) von maximal 10 Gew.-% (bezogen auf das Copolymerisat)
oder
b) einem Propylen/Buten(1)-Copolymerisat, vorzugsweise mit einem Buten(1)-Gehalt von 10 bis 15 Gew.-% (bezogen auf das Copolymerisat)
oder
c) einem Propylen/Ethylen/α-Olefin-Terpolymerisat, wobei das α-Olefin vorzugsweise 4 bis 10 Kohlenstoffatome aufweist; insbesondere bevorzugt sind Buten, Penten und Hexen
oder
d) einem Gemisch aus zwei oder mehreren der unter a), b) und c) genannten Co- bzw. Terpolymeren,
wobei die Deckschicht eine Schichtdicke von 0,4 bis 1,0 µm aufweist und wobei die Deckschicht mindestens ein Antiblockmittel mit einer Teilchengröße von 1 bis 6 µm enthält und wobei die Folie durch Längsstreckung bei einer Temperatur von 100 bis 120°C mit einem Streckverhältnis von 4-6 und Querstreckung bei einer Temperatur von 130-150°C mit einem Streckverhältnis von größer als 7,5 erhältlich ist.

Das unter c) genannte Terpolymere ist vorzugsweise zusammengesetzt aus 93,2 bis 99,0 Gew.-% Propylen, 0,5 bis 1,9 Gew.-% Ethylen und 0,5 bis 4,9 Gew.-% des α-Olefins (die Gewichtsprozentangaben beziehen sich auf die Gesamtmasse des Terpolymeren).

Die Basisschicht der Mehrschichtfolie besteht aus einem Propylenpolymeren mit einem Schmelzpunkt im Bereich von 162 bis 168°C. Isotaktisches Polypropylen mit einem n-heptanlöslichen Anteil von 6 Gew.-% und weniger stellt ein bevorzugtes Polypropylen dar. Das Polypropylen der Basisschicht hat im allgemeinen einen Schmelzindex von 1,5 bis 5 g/ 10 min. bei einer Belastung von 21,6 N und einer Temperatur von 230°C (DIN 53 735).

Das Kohlenwasserstoffharz mit einem Erweichungspunkt größer oder gleich 140°C wird ausgewählt aus der Gruppe bestehend aus Erdölharz (Petroleumharz), Styrolharz, Cyclopentadienharz und Terpenharz (diese Harze sind in Ullmans Enzyklopädie der Techn. Chemie, 4. Auflage, Band 2, Seiten 539 bis 553, beschrieben).

Bei diesem in der Basisschicht enthaltenen niedrigmolekularen Harz handelt es sich um ein natürliches oder synthetisches Harz mit einem Erweichungspunkt von ≧ 140°C (gemessen nach DIN 1995-U4, entspricht ASTM E-28) und in einer Menge von 5 bis 30 Gew.-%, vorzugsweise 10 bis 20 Gew.-% (bezogen auf die Gesamtmasse der Basisschicht). Überraschenderweise wurde gefunden, daß sich durch die Einarbeitung eines Harzes mit diesem Erweichungspunkt (≧ 140°C) in das Polypropylen die Wasserdampf-Barriereeigenschaften der Folie wesentlich verbessert, wobei gleichzeitig die optischen Eigenschaften und darüberhinaus das Schrumpfverhalten der Folie günstig beeinfluß werden. Zusätzlich kommt es bei den erfindungsgemäßen Folien nicht oder weniger zu Ablagerungen an Walzen, z.B. bei der Längsstreckung. Außerdem hat sich gezeigt, daß die erfindungsgemäße Folie in bezug auf die Gleiteigenschaften sicht besonders für schnelltaktige Verpackungsmaschinen eignet. Die Folienoberfläche ist glatt genug um nicht zu "slip-stic-Effekten", d.h. zu einem ungleichmäßigen Lauf über die Maschine zu führen. Andererseits besitzt sie auch die notwendige Rauhigkeit, um nicht zu Stauungen vor dem eigentlichen Schneidevorgang Anlaß zu geben.

Die Erdölharze sind solche Kohenwasserstoffharze, die durch Polymerisation von tiefzersetzten (deep-decomposed) Erdölmaterialien in Gegenwart eines katalysators hergestellt werden. Diese Erdölmaterialien enthalten gewähnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen monomeren wie α-Metylstyrol, Vinyltoluol und Butadien. Die Cyclopentadienharze sind Cyclopentadienhompolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Teperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel C₁₀H₁₆, die in fast allen etherischen Ölen oderölhaltigen Harzen von Pflanzen enthalten sind, und phenolmodifizierte Terpenhare. Als spezielle Beispiele der Terpene sind α-Pinen, β-Pinen, Dipenten, Limonen, Myrcen, Camphen und ähnliche Terpene zu nennen. Bei den Kohelnwasserstoffharzen kann es sich auch um die sogenannten modifizeirten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden.

Als Kohelnwasserstoffharze werden außerdem Styrolhompolymerisate, Styrolcopolymerisate, Cyclopentadienhompolmyerisate, Cyclopentadiencopolymersate und/oder Terpenpolymerisate mit einem Erweichungspunkt von jeweils ≧ 140°C eingesetzt (bei den ungesättigten Polymerisaten ist das hydrierte Produkt bevoorzugt). Ganz besonders bevorzugt werden die Cyclopentadienhompolymerisate mit einem Erweichungspunkt ≧ 140°C in der Basisschicht eingesetzt.

Sofern die Deckschicht oder die Deckschichten ebenfalls ein Kohlenwasserstoffharz enthalten, so können die oben für die Basisschicht aufgezählten Harze eingesetzt werden. Jedoch können in diesem Falle auch solche Harze mit einem Erweichungspunkt ≦ 140°C eingesetzt werden.

Um bestimmte Eigenschaften der erfindungsgemäßen Folie noch weiter zu verbesseren, können sowohl die Basisschicht als auch die Deckschicht(en) geeignete Zusätze in jeweils wirksamen Mengen enthalten, vorzugsweise Antistatika und/oder Antioxidantien. Als Antistatika werden bevorzugt gradkettige und gesättigte aliphatische, tertiäre Amine eingesetzt, welche einen aliphatischen Rest mit 10 bis 20 Kohlenstoffatomen aufweisen und 2-Hydroxy(C₂-C₄)-alkyl-Gruppen besitzen, woebei N-C₁₀-C₂₀-, vorzugsweise N-C₁₂-C₁₈-alkyl-N', N''-bis-(2-hydroxyethyl)-amine besonders geeignet sind.

Als Antioxidatien werden bevorzugt sogenannte primäre Antioxidaten, d.h. sterisch gehinderte Phenole oder sekundäre Amine aber auch sekundäre Antioxidantien, d.h. beispielsweise Thiother oder Phosphite oder Phosphonite oder auch synergistische Mischungen primärer und sekundärer Antioxidantien eingesetzt. Solche Antioxidantien sind beispielsweise beschreiben in Gächter/Müller: Kunststoff-Additive, Carl Hanser Verlag, 2. Ausgabe (1983). Eine Auswahl stellen die nachfolgend abgebildeten Verbindungen dar:

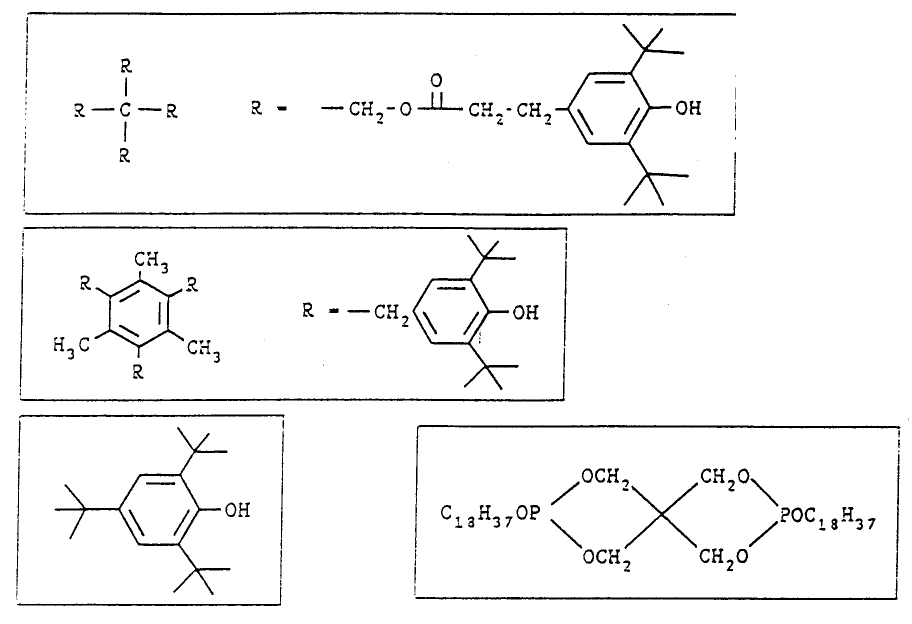

Als Gleitmittel werden bevorzugt Carbonsäureamide wie Erucasäureamid und Stearinsäureamid oder Polydiorganylsiloxane eingesetzt.

Geeignete Antiblockmittel mit einer mittleren Teilchengröße von 1-6µm sind beispielsweise mit dem Deckschichtrohstoff unverträgliche organische Polymerisate wie Polyamide, Polyester, Polycarbonate und dergleichen oder anorganische Substanzen wie Silikate, Siliciumdioxid und Calciumcarbonat, worunter insbesondere Silicumdioxid bevorzugt ist. Die Zusatzmenge dieser Antiblockmittel beträgt 0,1 bis 1 Gew.-%, vorzugsweise 0,15 bis 0,5 Gew.-%, bezogen auf das Gewicht der Deckschichten.

Die Dicke der Deckschicht(en) liegt zwischen 0,4 bis 1,0 µm.

Bei der Herstellung der erfindungsgemäßen Folien verfährt man erfindungsgemäß so, daß man die Längsstreckung bei einer Temperatur von 100-120°C und einem Streckverhältnis von 4-6 durchführt. Die Streckung in Querrichtung wird bei einer Temperatur von 130-160 °C durchgeführt, vorzugsweise bei 130 - 150 °C. Das Streckverhältnis in Querrichtung beträgt mehr als 7,5 und liegt vorzugsweise im Bereich von 8 bis 11. Nach der Streckung der Folie in Querrichtung schließt sich eine abschließende Fixierstufe an. Dabei wird die Folie bei einer Temperatur von 5 - 50 °C unterhalb der Strecktemperatur im Streckrahmen, eventuell leicht konvergierend, weitergeführt. Die Konvergenz während der Fixierstufe beträgt vorzugsweise 5 bis 15 %. Die Bedruckbarkeit der Folie wird durch eine der üblichen Oberflächenbehandlungen vor dem Aufrollen erreicht, z.B. durch Flammbehandlung oder elektrische Coronabehandlung. Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung - meist Wechselspannungen um 10.000 V (bei einer Frequenz von ca. 10.000 Hz) - angelegt ist, daß Sprüh- oder Coronaentladungen stattfinden können. Durch die Sprüh- oder Coronaentladungen wird die Luft oberhalb der Folienfläche ionisiert und verbindet sich mit den Molekülen auf der Folienoberfläche, so daß polare Einlagerungen in der im wesentlichen unpolaren Polymermatrix entstehen. Die Behandlungsintensitäten liegen hierbei im üblichen Rahmen, wobei Behandlungsintensitäten von 38 bis 42 mN/m bevorzugt sind.

Im folgenden wird die Erfindung anhand von Beispielen noch näher erläutert (Vergleich der Beispiele siehe Tabelle 1).

### Beispiel 1

Es wurde durch Coextrusion und anschließende biaxiale Streckorientierung eine dreischichtige transparente Folie mit einer Gesamtdicke von 20 µm hergestellt. Die Deckschichten hatten jeweils eine Dicke von 0,6 µm (es wurde eine Folie mit der Schichtreihenfolge ABA hergestellt, wobei A die Deckschicht und B die Basisschicht repräsentiert).

Die Basisschicht bestand aus Polypropylen mit einem Zusatz von 10 Gew.-% Harz (ESCOREZ® ECR 356, Exxon, Darien, Conneticut, USA; der Erweichungspunkt des Harzes lag bei 140°C) bezogen auf das Gesamtgewicht der Mischung. Die Schmelzviskosität des eingesetzten Polypropylens betrug 3,5 g/10 min bestimmt nach DIN 53 735 bei 2,16 kg Belastung.

Die Deckschichten bestanden aus einem Propylen-Ethylen-Copolymeren mit einem Ethylengehalt von 4,8 Gew.-%, dem eine Menge von 0,8 Gew.-% Polydimethylsiloxan, 0,13 Gew.-% eines phenolischen Stabilisators (Antioxidant 330, Fa. Ethyl Corp., Brussels, Belgium oder Baton Rouge, LA, USA), 0,075 Gew.-% Calciumstearat sowie 0,33 Gew.-% SiO₂ zugesetzt wurden, dessen mittlere Teilchengröße bei 2 µm lag. Das Polydimethylsiloxan hatte eine kinematische Viskosität von 30.000 mm²/sec; das Propylen-Ethylen-Copolymer eine Schmelzviskosität von 6,0 g/10 min, gemessen nach DIN 53 735 bei 2,16 kg.

### Beispiel 2

Es wurde eine Folie hergestellt wie in Beispiel 1, jedoch mit einem Harzanteil in der Basisschicht von 20 Gew.-% (es wurde das gleiche Harz wie in Beispiel 1 eingesetzt).

### Beispiel 3

Es wurde eine Folie hergestellt wie in Beispiel 1, jedoch mit einem Harzanteil in der Basisschicht von 30 Gew.-% (es wurde das gleiche Harz wie in Beispiel 1 eingesetzt).

### Beispiel 4

Es wurde eine Folie hergestellt wie in Beispiel 2, jetzt allerdings mit dem Aufbau ABC, wobei die A-Seite coronabehandelt wurde und kein Polydimethylsiloxan enthielt und deren C-Seite mit einer doppelten Menge Polydimethylsiloxan versetzt wurde (B-Schicht = Basisschicht).

### Beispiel 5

Es wurde eine Folie hergestellt wie in Beispiel 2, jetzt allerdings mit dem Aufbau ABC, wobei die C-Deckschicht aus einer Mischung, bestehend aus einem Ethylen/Proyplen-Comopolymer mit 10 Gew.-% Harz (es wurde das gleiche Harz wie in Beispiel 1 eingesetzt), zusammengesetzt war.

### Vergleichsbeispiel 1

Es wurde eine Folie hergestellt wie in Beispiel 1, jedoch ohne Zugabe des in Beispiel 1 verwendeten Harzes.

### Vergleichsbeispiel 2

Es wurde eine Folie hergestellt wie in Beispiel 2, jedoch mit einem Harz, dessen Erweichungspunkt bei 85 °C liegt (ESCOREZ 5380, Exxon, Darien, Conneticut, USA).

### Vergleichsbeispiel 3

Es wurde eine Folie hergestellt wie in Beispiel 2, deren Deckschichten jedoch nicht mit SiO₂ ausgerüstet waren.

Die festgestellten Eigenschaften wurden wie folgt bewertet (siehe Tabelle 1):
+ + = ausgezeichnet (bzw. keine Harzablagerungen an den Walzen) + = sehr gut (bzw. kaum Harzablagerungen) - = schlecht (bzw. schon merklich Harzablagerungen) -- = sehr schlecht (bzw. ausgeprägte Harzablagerungen) oder in Zahlenwerten angegeben.

Aus Tabelle 1 ist klar ersichtlich, daß die erfindungsgemäßen Folien den Vergleichsfolien (Vergleichsbeispiele) hinsichtlich des gewünschten Eigenschaftsbildes überlegen sind.

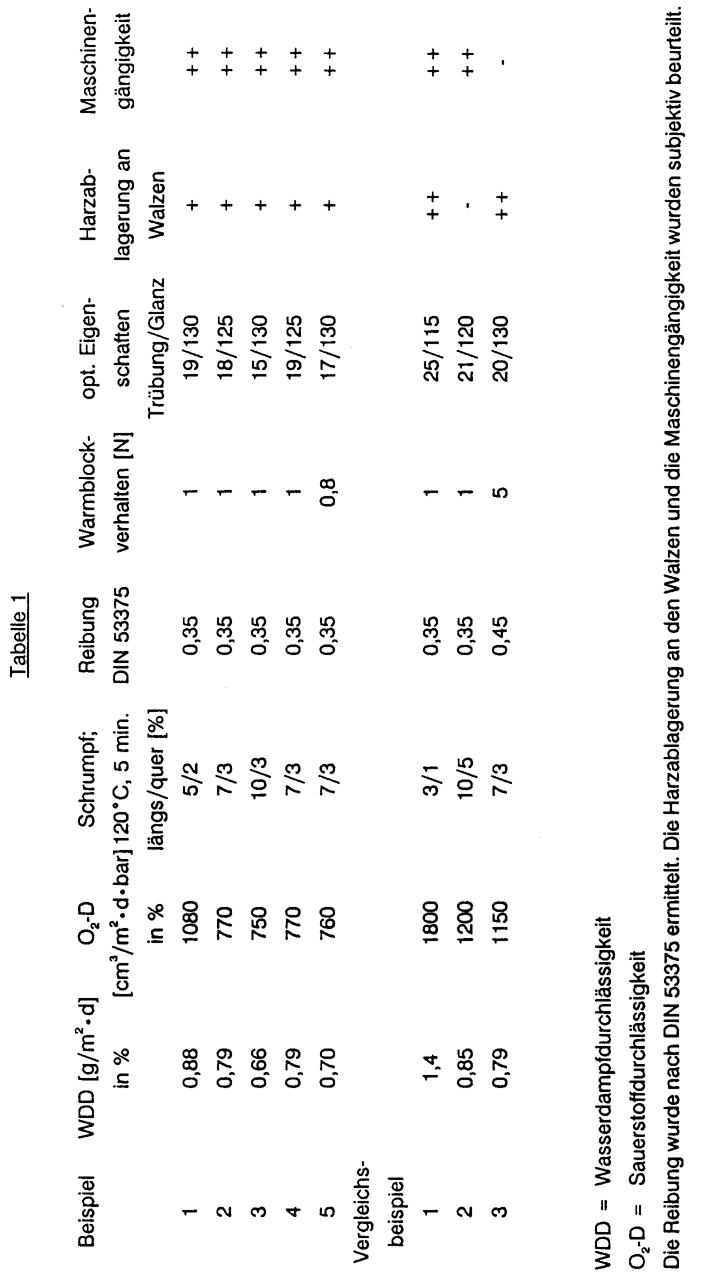

### Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

### Bestimmung der Trübung

Die Trübung der Folie wird in Anlehnung an ASTM-D 1003-52 gemessen, wobei anstelle einer 4°-Lochblende eine 1°- Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgt mit
- ≦ 15 %: = sehr gut
- ≧ 15 % bis 25 %: = mäßig
- ≧ 25 %: = schlecht

### Bestimmung des Glanzes

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf die photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit
- ≧ 115: = sehr gut
- ≦ 115 bis 100: = mäßig
- ≦ 100: = schlecht

### Bestimmung des Schrumpfes

Unter Schrumpf wird die prozentuale Längenänderung (l₀-l)/l₀ verstanden. Die quadratischen Folienmuster der Seitenlänge 10 cm (= l₀) werden dabei 5 min einer Temperatur von 120 °C ausgesetzt. Anschließend wird die verbliebene Länge l gemessen.

### Bestimmung der Wasserdampf- und Sauerstoffdurchlässigkeit

Die Wasserdampf-Durchlässigkeit wird gemäß DIN 53122 Teil 2 bestimmt. Die Bestimmung der Sauerstoff-Barrierewirkung erfolgt gemäß Entwurf DIN 53380 Teil 3 bei einer Luftfeuchte von 53 %.

## Patentansprüche

1. Siegelfähige Folie mit niedrigem Schrumpf bestehend aus:
1.) einer Basisschicht, bestehend aus:
Polypropylen und
einem Kohlenwasserstoffharz mit einem Erweichungspunkt größer oder gleich 140°C ausgewählt aus der Gruppe bestehend aus Erdölharzen, Styrolharzen, Cyclopentadienharzen und Terpenharzen und
2.) mindestens einer Deckschicht, bestehend aus:
a) einem Ethylen/Propylen-Copolymeren mit einem Ethylengehalt von maximal 10 Gew.-%
oder
b) einem Propylen/Buten(1)-Copolymeren
oder
c) einem Propylen/Ethylen/α-Olefin-Terpolymeren
oder
d) einem Gemisch aus zwei oder mehreren der unter a), b) und c) genannten Co- bzw. Terpolymeren,
wobei die Deckschicht eine Schichtdicke von 0,4 bis 1,0 µm aufweist und wobei die Deckschicht mindestens ein Antiblockmittel mit einer Teilchengröße von 1 bis 6 µm enthält und
wobei die Folie durch Längsstreckung bei einer Temperatur von 100-120°C und mit einem Streckverhältnis von 4-6 und Querstreckung bei einer Temperatur von 130-150°C mit einem Streckverhältnis von größer als 7,5 erhältlich ist.

2. Siegelfähige Folie nach Anspruch 1, dadurch gekennzeichnet, daß das Propylen/Buten(1)-Copolymere gemäß 2b) einen Buten(1)-Gehalt von 10-15 Gew.-% aufweist.

3. Siegelfähige Folie nach Anspruch 1 oder 2, dadurch gekennzeichnet, daß das α-Olefin in dem Terpolymeren gemäß 2c) ein α-Olefin mit 4 bis 10 Kohlenstoffatomen ist.

4. Siegelfähige Folie nach einem oder mehreren der Ansprüche 1 bis 3, dadurch gekennzeichnet, daß das α-Olefin in dem Terpolymeren gemäß 2c) ausgewählt wird aus der Gruppe bestehend aus: Buten(1), Penten(1) und Hexen(1).

5. Siegelfähige Folie nach einem oder mehreren der Ansprüche 1 bis 4, dadurch gekennzeichnet, daß das Terpolymer gemäß 2c) zusammengesetzt ist aus 93,2 bis 99,0 Gew.-% Propylen, 0,5 bis 1,9 Gew.-% Ethylen und 0,5 bis 4,9 Gew.-% α-Olefin.

6. Siegelfähige Folie nach einem oder mehreren der Ansprüche 1 bis 5, dadurch gekennzeichnet, daß die Basisschicht das Kohlenwasserstoffharz in einer Menge von 5 bis 30 Gew.-% enthält.

7. Siegelfähige Folie nach Anspruch 6, dadurch gekennzeichnet, daß die Basisschicht das Kohlenwasserstoffharz in einer Menge von 10 bis 20 Gew.-% enthält.

8. Siegelfähige Folie nach einem oder mehreren der Ansprüche 1 bis 7, dadurch gekennzeichnet, daß die Deckschicht oder die Deckschichten ein Kohlenwasserstoffharz enthalten.

9. Siegelfähige Folie nach Anspruch 8, dadurch gekennzeichnet, daß die Deckschicht oder die Deckschichten das Kohlenwasserstoffharz in einer Menge von 5 bis 30 Gew.-% enthalten.

10. Siegelfähige Folie nach Anspruch 9, dadurch gekennzeichnet, daß die Deckschicht oder die Deckschichten das Kohlenwasserstoffharz in einer Menge von 10 bis 20 Gew.-% enthalten.

11. Siegelfähige Folie nach einem oder mehreren der Ansprüche 8 bis 10, dadurch gekennzeichnet, daß das Kohlenwasserstoffharz der Deckschicht oder der Deckschichten ausgewählt wird aus der Gruppe, bestehend aus Erdölharzen, Styrolharzen, Cyclopentadienharzen und Terpenharzen.

12. Siegelfähige Folie nach Anspruch 11, dadurch gekennzeichnet, daß das Kohlenwasserstoffharz ein Cyclopentadienharz ist.

13. Siegelfähige Folie nach einem oder mehreren der Ansprüche 1 bis 12, dadurch gekennzeichnet, daß die Deckschicht(en) ein oder mehrere Antistatika und/oder Antioxidantien und/oder Gleitmittel enthalten.

14. Siegelfähige Folie nach einem oder mehreren der Ansprüche 1 bis 13, dadurch gekennzeichnet, daß die Basisschicht ein oder mehrere Antistatika und/oder Antioxidantien und/oder Gleitmittel enthält.

15. Siegelfähige Folie nach einem oder mehreren der Ansprüche 1 bis 14, dadurch gekennzeichnet, daß die Folie eine Basisschicht und zwei Deckschichten aufweist.

16. Verwendung der siegelfähigen Folie nach einem oder mehreren der Ansprüche 1 bis 16 als Verpackungsmaterial.

17. Verfahren zur Herstellung einer siegelfähigen Folie mit niedrigem Schrumpf aus einer Basisschicht, bestehend aus Polypropylen und einem Kohlenwasserstoffharz mit einem Erweichungspunkt größer oder gleich 140°C, ausgewählt aus der Gruppe, bestehend aus Erdölharzen, Styrolharzen, Cyclopentadienharzen und Terpenharzen und mindestens einer Deckschicht bestehend aus:
a) einem Ethylen-Propylen-Copolymeren mit einem Ethylengehalt von maximal 10 Gew.-%
b) einem Propylen-Buten-1-Copolymeren oder
c) einem Propylen-Ethylen-α-Olefin-Corpolymeren oder
d) einem Gemisch aus 2 oder mehreren der unter a), b) und c) genannten Co- bzw. Terpolymeren,
wobei die Deckschicht und/oder die Basisschicht mindestens ein Antiblockmittel und/oder Gleitmittel enthalten, dadurch gekennzeichnet, daß man mittels Coextrusion in einer Breitschlitzdüse zunächst eine Vorfolie, bestehend aus einer Basisschicht und mindestens einer Deckschicht, herstellt, die dann auf einer Kühlwalze verfestigt und anschließend bei einer Temperatur von 105 bis 120°C und mit einem Streckverhältnis von 4 bis 6 längs gestreckt und bei einer Temperatur von 130 bis 150°C mit einem Streckverhältnis von größer 7,5 quer gestreckt wird.

## Claims

1. A sealable film having low shrinkage, comprising:
1.) a base ply comprising:
polypropylene and
a hydrocarbon resin having a softening point greater than or equal to 140°C, selected from the group consisting of mineral oil resins, styrene resins, cyclopentadiene resins and terpene resins, and
2.) at least one top ply, comprising:
a) an ethylene/propylene copolymer having an ethylene content of not more than 10% by weight
or
b) a propylene/1-butene copolymer
or
c) a propylene/ethylene/α-olefin terpolymer
or
d) a mixture of two or more of the co- or terpolymers stated under a), b) and c),
the top ply having a ply thickness of from 0.4 to 1.0 µm and the top ply containing at least one antiblocking agent having a particle size of from 1 to 6 µm, and
the film being obtainable by longitudinal orientation at a temperature of 100-120°C and with an orientation ratio of 4-6 and transverse orientation at a temperature of 130-150°C with an orientation ratio greater than 7.5.

2. The sealable film as claimed in claim 1, wherein the propylene/1-butene copolymer according to 2b) has a 1-butene content of 10-15% by weight.

3. The sealable film as claimed in claim 1 or 2, wherein the α-olefin in the terpolymer according to 2c) is an α-olefin having 4 to 10 carbon atoms.

4. The sealable film as claimed in one or more of claims 1 to 3, wherein the α-olefin in the terpolymer according to 2c) is selected from the group consisting of 1-butene, 1-pentene and 1-hexene.

5. The sealable film as claimed in one or more of claims 1 to 4, wherein the terpolymer according to 2c) is composed of from 93.2 to 99.0% by weight of propylene, from 0.5 to 1.9% by weight of ethylene and from 0.5 to 4.9% by weight of α-olefin.

6. The sealable film as claimed in one or more of claims 1 to 5, wherein the base ply contains the hydrocarbon resin in an amount of from 5 to 30% by weight.

7. The sealable film as claimed in claim 6, wherein the base ply contains the hydrocarbon resin in an amount of from 10 to 20% by weight.

8. The sealable film as claimed in one or more of claims 1 to 7, wherein the top ply or the top plies contains or contain a hydrocarbon resin.

9. The sealable film as claimed in claim 8, wherein the top ply or the top plies contains or contain the hydrocarbon resin in an amount of from 5 to 30% by weight.

10. The sealable film as claimed in claim 9, wherein the top ply or the top plies contains or contain the hydrocarbon resin in an amount of from 10 to 20% by weight.

11. The sealable film as claimed in one or more of claims 8 to 10, wherein the hydrocarbon resin of the top ply or of the top plies is selected from the group consisting of mineral oil resins, styrene resins, cyclopentadiene resins and terpene resins.

12. The sealable film as claimed in claim 11, wherein the hydrocarbon resin is a cyclopentadiene resin.

13. The sealable film as claimed in one or more of claims 1 to 12, wherein the top ply or plies contains or contain one or more antistatic agents and/or antioxidants and/or lubricants.

14. The sealable film as claimed in one or more of claims 1 to 13, wherein the base ply contains one or more antistatic agents and/or antioxidants and/or lubricants.

15. The sealable film as claimed in one or more of claims 1 to 14, wherein the film has a base ply and two top plies.

16. The use of a sealable film as claimed in one or more of claims 1 to 16 as packaging material.

17. A process for the production of a sealable film having low shrinkage, comprising a base ply containing polypropylene and a hydrocarbon resin having a softening point greater than or equal to 140°C, selected from the group consisting of mineral oil resins, styrene resins, cyclopentadiene resins and terpene resins, and at least one top ply comprising:
a) an ethylene/propylene copolymer having an ethylene content of not more than 10% by weight
b) a propylene/1-butene copolymer or
c) a propylene/ethylene/α-olefin terpolymer or
d) a mixture of 2 or more of the co- or terpolymers stated under a), b) and c),
the top ply and/or the base ply containing at least one antiblocking agent and/or lubricant, wherein a prefilm comprising a base ply and at least one top ply is first produced by means of coextrusion in a sheet die, and said prefilm is then solidified on a chill roll and then longitudinally oriented at a temperature of from 105 to 120°C and with an orientation ratio of from 4 to 6 and transversely oriented at a temperature of from 130 to 150°C with an orientation ratio greater than 7.5.

## Revendications

1. Feuille scellable ayant un faible retrait, composée de :
1) une couche de base composée de :
polypropylène et
une résine hydrocarbonée ayant un point de ramollissement supérieur ou égal à 140°C, prise dans le groupe comportant les résines de pétrole, les résines styréniques, les résines cyclopentadiéniques et les résines terpéniques, et
2) au moins une couche extérieure composée de :
a) un copolymère de l'éthylène/propylène ayant une teneur en éthylène au maximum de 10 % en poids
ou
b) un copolymère du propylène/butène(1)
ou
c) un terpolymère du propylène/éthylène/α-oléfine
ou
d) un mélange de deux ou plusieurs des corespectivement terpolymères cités aux points a), b) et c),
la couche extérieure présentant une épaisseur de 0,4 à 1,0 µm et la couche extérieure contenant au moins un agent anti-bloquant ayant une taille moyenne de particules de 1 à 6 µm, et en obtenant la feuille par étirage en longueur à une température de 100 à 120°C avec un rapport d'étirage de 4 à 6 et par étirage en largeur à une température de 130 à 150°C avec un rapport d'étirage supérieur à 7,5.

2. Feuille scellable selon la revendication 1, caractérisée en ce que le copolymère propylène/butène(1) selon 2b) présente une teneur en butène(1) de 10 à 15 % en poids.

3. Feuille scellable selon la revendication 1 ou 2, caractérisée en ce que l'α-oléfine dans le terpolymère selon 2c) est une α-oléfine avec 4 à 10 atomes de carbone.

4. Feuille scellable selon une ou plusieurs des revendications 1 à 3, caractérisée en ce que l'α-oléfine dans le terpolymère selon 2c) est prise dans le groupe comportant le butène(1), le pentène(1) et l'hexène(1).

5. Feuille scellable selon une ou plusieurs des revendications 1 à 4, caractérisée en ce que le terpolymère selon 2c) est composé de 93,2 à 99,0 % en poids de propylène, de 0,5 à 1,9 % en poids d'éthylène et de 0,5 à 4,9 % en poids d'α-oléfine.

6. Feuille scellable selon une ou plusieurs des revendications 1 à 5, caractérisée en ce que la couche de base contient la résine hydrocarbonée dans une quantité de 5 à 30 % en poids.

7. Feuille scellable selon la revendication 6, caractérisée en ce que la couche de base contient la résine hydrocarbonée dans une quantité de 10 à 20 % en poids.

8. Feuille scellable selon une ou plusieurs des revendications 1 à 7, caractérisée en ce que la couche extérieure ou les couches extérieures contiennent une résine hydrocarbonée.

9. Feuille scellable selon la revendication 8, caractérisée en ce que la couche extérieure ou les couches extérieures contiennent la résine hydrocarbonée dans une quantité de 5 à 30 % en poids.

10. Feuille scellable selon la revendication 9, caractérisée en ce que la couche extérieure ou les couches extérieures contiennent la résine hydrocarbonée dans une quantité de 10 à 20 % en poids.

11. Feuille scellable selon une ou plusieurs des revendications 8 à 10, caractérisée en ce que la résine hydrocarbonée de la couche extérieure ou les couches extérieures est prise dans le groupe composé des résines de pétrole, des résines styréniques, des résines cyclopentadiéniques et des résines terpéniques.

12. Feuille scellable selon la revendication 11, caractérisée en ce que la résine hydrocarbonée est une résine cyclopentadiénique.

13. Feuille scellable selon une ou plusieurs des revendications 1 à 12, caractérisée en ce que la ou les couches extérieures contiennent un ou plusieurs antistatiques et/ou antioxydants et/ou agents démoulants.

14. Feuille scellable selon une ou plusieurs des revendications 1 à 13, caractérisée en ce que la couche de base contient un ou plusieurs antistatiques et/ou antioxydants et/ou agents démoulants.

15. Feuille scellable selon une ou plusieurs des revendications 1 à 14, caractérisée en ce que la feuille présente une couche de base et deux couches extérieures.

16. Utilisation de la feuille scellable selon une ou plusieurs des revendications 1 à 15, comme matière d'emballage.

17. Procédé pour la préparation d'une feuille scellable ayant un faible retrait à partir d'une couche de base composée de polypropylène et d'une résine hydrocarbonée ayant un point de ramollissement supérieur ou égal à 140°C, prise dans le groupe composé des résines de pétrole, des résines styréniques, des résines cyclopentadiéniques et des résines terpéniques, et au moins d'une couche extérieure composée de :
a) un copolymère de l'éthylène/propylène ayant une teneur en éthylène au maximum de 10 % en poids,
b) un copolymère du propylène/butène-1, ou
c) un copolymère du propylène/éthylène/α-oléfine ou
d) un mélange de deux ou plusieurs des co- respectivement terpolymères cités aux points a), b) et c),
la couche extérieure et/ou la couche de base contenant au moins un agent anti-bloquant et/ou agent démoulant, caractérisé en ce que, à l'aide d'une coextrusion avec une filière plate, on prépare d'abord une feuille préalable composée d'une couche de base et d'au moins une couche extérieure, que l'on consolide ensuite sur un cylindre refroidissant et ensuite à une température de 105 à 120°C et que l'on étire avec un rapport d'étirage de 4 à 6 en longueur et à une température de 130 à 150°C avec un rapport d'étirage supérieur à 7,5 dans le sens transversal.
